# EUROPEAN PATENT APPLICATION

(11) **EP 4 418 407 A1**
(43) Date of publication of application: **21.08.2024**
(21) Application number: 23156822.1
(22) Date of filing: 15.02.2023
(51) Int. Cl.: H01M 10/613, H01M 10/647, H01M 10/653, H01M 10/6554, H01M 50/209, H01M 50/218, H01M 50/229

(54) **BATTERY CELL FRAME AND METHOD FOR MANUFACTURING A BATTERY CELL FRAME**

(71) Applicant: Röchling Automotive SE, 68165 Mannheim (DE)
(72) Inventor: Trommershaeuser, Jan-Philipp, 68623 Lampertheim (DE); Martelli, Edoardo, 10153 Torino (IT); Santaniello, Edoardo, 10124 Moncalieri (IT); Tremonti, Claudia, 39100 Bolzano (IT)
(74) Representative: Ullrich & Naumann PartG mbB

(57) **Abstract**

A battery cell frame (114) is disclosed, wherein at least one battery cell (112) is supportable by the battery cell frame (114) in at least three directions of a Cartesian coordinate system. The battery cell frame (114) comprises at least two cooling components (122) configured for compensating a temperature of the at least one battery cell (112) and at least one plastic frame element (126) generated by at least partially overmolding at least one of the cooling components (122), wherein a first cooling component (128) comprises at least one planar collecting portion (132) and at least one heat discharge portion (134), wherein the first cooling component (128) and a second cooling component (130) both are arranged at least partially on the outside of the frame element (126).

Further, a method for manufacturing a battery cell frame (114) and a battery module (110) are disclosed.

## Description

### Technical Field

The invention relates to a battery cell frame and a method for manufacturing a battery cell frame. Further, the invention relates to a battery module. The devices and methods according to the present invention may generally be applied in the field of electrical power storage, such as in the field of electrical and/or electrochemical energy storage, e.g. as used in electrically powered entities. Specifically, the invention may be applied in the field of electro-mobility, such as in fuel cell, hybrid and/or electric vehicles, e.g. in cars and/or trucks. Other applications however are feasible.

### Background art

Battery cell frames are generally used for structuring battery packs and modules and/or for providing stability to batteries within the battery packs and/or battery modules. Typically, battery packs and modules comprise cooling means for preventing the battery packs and/or modules from overheating.

EP 3 343 672 B1describes a busbar for cooling battery cells and a battery module using the same. The busbar for cooling battery cells is a busbar configured to cool a plurality of battery cells included in a battery module, and includes: a body portion formed in a strap shape and contacting an electrode lead of each battery cell; and a bent portion integrally formed with the body portion and extending from one end of the body portion to be bent in a thickness direction of the body portion, wherein the bent portion includes: a coupling groove coupled to a coupling protrusion that is prepared on a cooling plate of the battery module or a coupling protrusion that is prepared on a predetermined frame of the battery module, the predetermined frame supporting the busbar; and a thermal contact surface thermally contacting the cooling plate.

Despite the advantages involved in known battery cooling systems, several technical challenges remain. Thus, usually, cooling means are provided as stand-alone components, e.g. manufactured independently from the components of battery packs and/or battery modules, that need to be mounted and/or fixed to the pack and/or module separately. However, assembly of battery packs and/or battery modules with separate and/or additional cooling means generally is complicated and time-consuming. Furthermore, electrical isolation between the batteries and the cooling means, such as a cooling conduit, typically is an additional issue and requires complex and complicated assembling procedures.

### Problem to be solved

It is therefore desirable to provide devices and methods, which address the above mentioned shortcomings of known devices and methods. Specifically, a battery cell frame, a method for manufacturing a battery cell frame and a battery module shall be proposed, which allow for a simple assembly and manufacturing.

### Summary

This problem is addressed by a battery cell frame, a method for manufacturing a battery cell frame and a battery module with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a battery cell frame is proposed, wherein at least one battery cell, specifically a battery pouch, is supportable by the battery cell frame in at least three directions, preferably in at least five directions, of a Cartesian coordinate system. The battery cell frame comprises at least two cooling components configured for compensating a temperature of the at least one battery cell, e.g. cooling the at least one battery cell. Specifically, the at least two cooling components may be configured for compensating a temperature, e.g. cooling, at least one of the battery cell's electrodes, e.g. at least one electrical connector of the battery cell also referred to as "tab". Specifically, the at least two cooling components may be configured for compensating the temperature, e.g. cooling, both electrodes of the battery cell, such as both the electrical connectors and/or tabs of the at least one battery cell. The battery cell frame further comprises at least one plastic frame element generated by at least partially overmolding at least one of the cooling components. A first cooling component comprises at least one planar collecting portion and at least one heat discharge portion. The first cooling component and a second cooling component both are arranged at least partially on the outside of the frame element.

The term "battery cell frame" as used herein is a broad term and is to be given its ordinary and customary meaning to a person of ordinary skill in the art and is not to be limited to a special or customized meaning. The term specifically may refer, without limitation, to an element and/or object configured for providing structure and/or stability to one or more batteries, particularly in a battery pack and/or in a battery module. The battery cell frame may specifically be configured for supporting and/or holding, e.g. mechanically fixating, at least one battery, such as a battery pouch, within its frame structure, e.g. by at least partially encircling and/or enclosing the battery. In particular, a contour and/or form of the battery cell frame may correspond to the contour and/or form of the battery that is supposed to be supported and/or held within the battery cell frame.

The term "plastic frame element" as used herein is a broad term and is to be given its ordinary and customary meaning to a person of ordinary skill in the art and is not to be limited to a special or customized meaning. The term specifically may refer, without limitation, to an arbitrary object comprising polymeric material and being configured for enclosing, in at least one dimension, another object. In particular, the plastic frame element may be or may comprise at least one rigid mechanical structure and/or holder generated by a molding process, specifically by an overmolding process. As an example, the plastic frame element may comprise at least one polymeric material. In particular, the plastic frame element may be generated by at least partially overmolding at least one cooling component. As used herein, the term "overmolding" may specifically, without limitation, refer to a process of shaping and/or casting a pliable material at least partially around an insert or inlay, e.g. around the at least one cooling component as an insert. In particular, the overmolding may refer to a process of first shaping and/or forming the polymeric material while in a liquid and/or pliable state, e.g.at least partially around the cooling component, by using a mold and/or matrix and then hardening and/or setting the polymeric material.

The term "cooling component" as used herein is a broad term and is to be given its ordinary and customary meaning to a person of ordinary skill in the art and is not to be limited to a special or customized meaning. The term specifically may refer, without limitation, to an arbitrary shaped element configured for performing a heat compensation. In particular, the cooling component may be or may comprise a heat conducting material, e.g. dissipating and/or transporting heat from one area of the cooling component to another area of the cooling component. The cooling component may, for example for the purpose of heat transport, comprise one or more portions, such as a collecting portion and a discharge portion, wherein, as an example, the cooling component may be configured for transporting heat from the collection portion to the discharge portion. Further, the cooling component may also allow electrical connection of the electrodes of the battery, e.g. of the tabs.

In particular, the cooling component may be configured for cooling the battery cell's electrodes. However, the cooling effect may also be inversed, i.e. allowing a heating instead of cooling of the battery cell's electrodes. Thus, though the cooling components are primarily described in connection with their purpose of cooling, they are explicitly also configured for heating, i.e. increasing a temperature, of the battery cells, i.e. of the batteries' electrodes, depending on an actual temperature of the battery cells in comparison to a preferred range of working temperature of the battery cells.

The term "collecting portion" as used herein is a broad term and is to be given its ordinary and customary meaning to a person of ordinary skill in the art and is not to be limited to a special or customized meaning. The term specifically may refer, without limitation, to a portion of the cooling component arranged at and/or by a heat source, such as the electrodes of a battery cell, and configured for absorbing the heat, i.e. to prevent and/or restrict a temperature increase of the heat source, e.g. of the battery electrodes. In particular, the collecting portion may be formed and/or shaped according to its purpose of dissipating heat from the heat source. Thus, the term "planar collecting portion" may, without limitation, refer to the geometry of the collecting portion having a flat and/or panel-like shape and/or form.

The term "heat discharge portion" as used herein is a broad term and is to be given its ordinary and customary meaning to a person of ordinary skill in the art and is not to be limited to a special or customized meaning. The term specifically may refer, without limitation, to a portion of the cooling component arranged apart from the heat source, such as at a distance from the electrodes of a battery cell, and configured for removing the heat collected by the collecting portion and transferring it to a heat sink, such as to a typically cool and/or cold element, preferably arranged outside of the frame element, i.e. outside of the battery cell frame.

In particular, the positioning of the collecting portion and the heat discharge portion may specifically depend on the location of the heat source, specifically of the heat source whose heat is supposed to be compensated for by the cooling component.

The term "outside" as used herein is a broad term and is to be given its ordinary and customary meaning to a person of ordinary skill in the art and is not to be limited to a special or customized meaning. The term specifically may refer, without limitation, to an area and/or space arranged externally of an object and/or element. Thus, in particular, the term "outside of the frame element" may refer to an area and/or space, such as a three-dimensional area, arranged externally of the frame element, e.g. bordering at an external surface of the frame element. The space outside of the frame element may explicitly differ from and may not comprise the area and/or space encircled by the frame element.

In particular, one or more of the cooling components may comprise at least one material selected from the group consisting of copper, gold, aluminum, one or more of their alloys and graphite. Thus, at least one of the cooling components may for example be a metal material, e.g. a metal, such as copper, gold, aluminum and one or more of a metal alloy, e.g. an alloy of one or more of the listed metal materials. Additionally or alternatively, at least one of the cooling components may be or may comprise a graphite material. In particular, an inventive battery cell frame comprises a combination of aluminium and copper and/or aluminium and graphite and/or copper and graphite.

The at least one heat discharge portion may specifically comprise at least one bend. As an example, a first portion of the heat discharge portion, specifically a portion adjacent to the collecting portion, may be arranged in parallel to the collecting portion. Further, a second portion of the heat discharge portion may be arranged essentially perpendicular to the collecting portion. Specifically, the second portion of the heat discharge portion may be arranged with a deviation from the perpendicular orientation by no more than 20°. Thus, the first portion of the heat discharge portion of the first cooling component may be arranged between the planar collecting portion of the first cooling component and the second portion of the heat discharge portion. In particular, the heat discharge portion may comprise the at least one bend, such that compared to the planar collecting portion, the second portion of the heat discharge portion may be arranged at an angle of 90°±20°.

Additionally, the at least one heat discharge portion may comprise at least one further bend in an opposite direction than the at least one first bend. Thus, the heat discharge portion may comprise two opposing bends. In particular, the at least one heat discharge portion may comprise at least one third portion. The third portion of the heat discharge portion may specifically be arranged between the first portion and the second portion of the heat discharge portion. Further, the third portion of the discharge portion may be arranged at an angle from the collecting portion in the range of from 5° to 85°. Specifically, the third portion of the discharge portion may be arranged at an angle from the collecting portion in the range of from 20° to 70°. More specifically, the third portion of the discharge portion may be arranged at an angle from the collecting portion in the range of from 40° to 50°.

The at least one heat discharge portion may specifically comprise two bends in opposing directions. In particular, the first bend may be a 45°±5°-bend in a direction towards a bottom of the frame element, wherein the second bend may be a 135°±5°-bend in a direction away from the bottom of the frame element.

The heat discharge portion of the first cooling component may penetrate a wall of the frame element, the wall separating an inside of the frame element from an outside of the frame element. Specifically, the heat discharge portion of the first cooling component may at least partially be arranged within the wall of the frame element, such as to penetrate the wall. Thus, as an example, the heat discharge portion of the first cooling component may, specifically at least partially, be overmolded by the plastic frame element, i.e. by the polymeric material of the plastic frame element, e.g. when generating the frame element.

The at least one collecting portion of the first cooling component may be arranged within the inside of the frame element in a planar fashion. In particular, the first cooling component may be arranged such that its collecting portion is present within the inside of the frame element, e.g. in a space at least partially enclosed and/or encircled by the frame element. Specifically, the collection portion of the first cooling component may be arranged within the inside of the frame element in a planar fashion, such as in a planar orientation, for example in an orientation such that its flat and/or planar structure lies within and/or parallel to a plane encircled by the frame element, e.g. to an encircling plane of the frame element.

The first cooling component may for example comprise two heat discharge portions arranged on opposing sides of the collecting portion. Specifically, for the purpose of even more effective heat compensation, e.g. heat dissipation from the electrodes of the batteries, the first cooling component may comprise at least two heat discharge portions, e.g. at least one on at least two sides of the collecting portion.

The two discharge portions may specifically have different shapes. In particular, one of the discharge portions may comprise two bends as outlined herein and another of the discharge portions may comprise a single bend as outlined herein. Thus, as an example, the one of the discharge portions may comprise the two opposing bends, wherein the other one of the discharge portions may comprise the single bend.

The second cooling component may have at least two portions arranged at an angle. Specifically, the two portions of the second cooling component may be arranged at an essentially perpendicular angle with a deviation from a perpendicular orientation of no more than 20°. Thus, particularly, the second cooling component may be L-shaped. As an example, the second cooling component may be arranged at at least one corner of the plastic frame element, specifically at least partially on the outside of the at least one corner of the plastic frame element.

The battery cell frame may further comprise at least one third cooling component. Specifically, the third cooling component may be identical to the second cooling component. Alternatively, the third cooling component may be formed mirror-inversely to the second cooling component. In particular, the second and third cooling components may be arranged on opposite sides of the frame element, i.e. on different corners of the frame element.

The plastic frame element may have a bottom portion and at least one sidewall portion. Specifically, the plastic frame element may have at least three sidewall portions adjacent to the bottom portion. More specifically, the plastic frame element may have four sidewall portions adjacent to the bottom portion, i.e. forming a rectangle and/or a square shape. Thus, as an example, the plastic frame element may specifically have a cuboid shape.

The bottom portion of the plastic frame element may comprise at least one ribbed structure on its surface facing outside of the frame element. Thus, the plastic frame element, specifically on an outside of the bottom portion of the frame element, may have a ribbed structure. In particular, the ribbed structure may be beneficial, i.e. when stacking multiple battery cell frames, e.g. to form a battery module as further described below, for defining an at least partially air-filled gap between the bottom portion of the frame element and a battery cell arranged below and supported by a battery cell frame of the stack of battery cell frames arranged below. In particular, the at least partially air-filled gap, also called air gap, may result from the geometry of the plastic frame element, such as of the bottom portion of the frame element, for example of frame walls. Specifically, the ribbed structure, i.e. ribs on the plastic frame element, may not be compulsory, but may, for example, provide advantages for the inventive battery cell frame, such as an increased insulation, i.e. a thermic insulation. As an example, the at least partially air-filled gap may be a result and/or a consequence of the geometry of the frame element, i.e. of the bottom portion of the frame element, such as of the walls and ribs.

The plastic frame element, as outlined above, may comprises at least one polymeric material. In particular, the polymeric material may be one or more of a thermoplastic material and a thermosetting material. Thus, the plastic frame element may comprise a thermoplastic material, a thermosetting material or a combination of both the thermoplastic and the thermosetting material. In particular, the thermoplastic material may comprise at least one mineral content, e.g. different thermoplastic materials having different mineral content may be used.

The battery cell frame may further comprise at least one connecting element, wherein the battery cell frame may specifically be connectable to one or more of a further battery cell frame and an end plate via the connecting element. Specifically, the connecting element may be formed integrally with the plastic frame element. Thus, the connecting element and the plastic frame element may be integrally formed, i.e. in one part. As an example, the connecting element may be one or more of an eyelet and a hook, e.g. facilitating an alignment of multiple battery cell frames.

In a further aspect of the present invention, a method for manufacturing a battery cell frame as disclosed herein is proposed. The method comprises the following steps, which may be performed in the given order. Still, a different order is possible. The method may comprise additional steps which are not mentioned. It is further possible to perform one or more or all of the method steps repeatedly. Further, two or more of the method steps may be performed simultaneously or in a timely overlapping fashion.

The method comprises the following steps:
a) providing the at least two cooling components;
b) generating the at least one frame element by at least partially overmolding at least one of the at least two cooling components in at least one overmolding process.

In particular, the method is configured for manufacturing the battery cell frame as described above or as further outlined below. Thus, for possible definitions and options, reference may be made to the description of the battery cell frame as disclosed herein.

In yet a further aspect of the present invention, a battery module is proposed. The battery module comprises a plurality of battery cells, specifically a plurality of battery pouches, and a plurality of battery cell frames as described herein. Thus, for possible definitions and options, reference may be made to the description of the battery cell frame as described above or as further outlined below. In the battery module, the plurality of battery cell frames are arranged in a stack, wherein at least one of the battery cells is arranged inside of each of the battery cell frames. The battery module further comprises at least one end plate forming a lid on the stack of battery cell frames.

The term "battery module" as used herein is a broad term and is to be given its ordinary and customary meaning to a person of ordinary skill in the art and is not to be limited to a special or customized meaning. The term specifically may refer, without limitation, to an assembly of multiple battery cells, specifically predefined number of battery cells, combined into at least one frame, specifically a plurality of frames, configured for protecting the battery cells from external influences. In particular, the battery module may be a battery protecting installable entity.

The term "battery pouch" as used herein is a broad term and is to be given its ordinary and customary meaning to a person of ordinary skill in the art and is not to be limited to a special or customized meaning. The term specifically may refer, without limitation, to a battery cell enclosed by a sheet and/or film. In particular, the battery pouch may refer to a batter cell having a flexible enclosure, such as a pouch and/or bag, for example a flexible aluminum-based outer sheet and/or film. Specifically, the battery pouch may at least partially be flexible, e.g. comprising an at least partially flexible material. As an example, the battery pouch may preferably be or may comprise a lithium-ion polymer battery. However, other types of batteries may also be possible.

The term "stack" as used herein is a broad term and is to be given its ordinary and customary meaning to a person of ordinary skill in the art and is not to be limited to a special or customized meaning. The term specifically may refer, without limitation, to a geometrically arrangement of arbitrary articles on top of each other, e.g. in a pile.

The term "end plate" as used herein is a broad term and is to be given its ordinary and customary meaning to a person of ordinary skill in the art and is not to be limited to a special or customized meaning. The term specifically may refer, without limitation, to a flat element configured for limiting and/or closing off an arbitrary stack of objects. In particular, the at least one end plate may be or may refer to a disc and/or panel closing off the stack of battery cell frames, i.e. by forming at least one lid on the stack, e.g. as a top layer and/or a bottom layer.

The battery module may further comprise a plurality of thermal compensation pads. In particular, at least one of the thermal compensation pads may be arranged inside of each of the battery cell frames on a side of the battery cell opposing a collecting portion of the first cooling component of the battery cell frame.

The term "thermal compensation pad" as used herein is a broad term and is to be given its ordinary and customary meaning to a person of ordinary skill in the art and is not to be limited to a special or customized meaning. The term specifically may refer, without limitation, to an arbitrary object and/or element configured for compensating a change in size and/or form due to temperature variations. In particular, in the battery module, the thermal compensation pad may be configured for compensating, e.g. by changing its shape and/or form, a shrinkage or a swelling of parts of the battery module, specifically a swelling or shrinking of battery cells, e.g. of battery pouches.

Each of the thermal compensation pads may specifically be compressible. Additionally or alternatively, each of the thermal compensation pads may comprise at least one porous sheet impregnated with at least one solvent. As an example, in the thermal compensation pad, the porous sheet and the solvent may be enclosed in a laminating sheet comprising aluminum. In particular, each of the thermal compensation pads may be configured for compensating a potential mechanical swelling of the battery cell, wherein at least one of the thermal compensation pads, preferably all of the thermal compensation pads, may be thermally isolating.

In a preferred embodiment of the invention, the cooling components with multiple bends each comprise one of both alternatives graphite and aluminium. In case of the graphite, the cooling component can be mounted instead of being overmoulded.

The proposed devices and methods provide a large number of advantages over known devices and methods of similar kind. In particular, the devices and methods according to the present application may allow for a more efficient cooling and/or heating of the battery cells, specifically of the batteries' electrodes and/or tabs. Specifically, the more efficient compensation of the temperature of the battery cells, i.e. of their tabs, may allow for higher current rates, longer cycle life and an overall better performance of the battery and thus also of the battery module.

Further, the proposed battery cell frame and battery module may, though providing a more efficient temperature compensation, may have a reduced number of components compared to known devices. In particular, the proposed method and devices may allow for less individual parts, e.g. in the battery cell frame and the battery module. This may specifically help reduce manufacturing costs and complexity of the assembly.

Furthermore, the proposed devices and methods may allow higher currents without overheating of the battery, e.g. without the battery getting locally too hot, while at the same time, the battery itself as well as its electrical connections, i.e. the tabs, may be supported, specifically mechanically supported by one single component, e.g. by the cooling component of the battery cell frame.

Summarizing and without excluding further possible embodiments, the following embodiments may be envisaged:
Embodiment 1: A battery cell frame, wherein at least one battery cell, specifically a battery pouch, is supportable by the battery cell frame in at least three directions, preferably in at least five directions, of a Cartesian coordinate system, the battery cell frame comprising at least two cooling components configured for compensating a temperature, e.g. cooling, of the at least one battery cell, specifically at least one, preferably two, of the battery cell's electrodes, and at least one plastic frame element generated by at least partially overmolding at least one of the cooling components, wherein a first cooling component comprises at least one planar collecting portion and at least one heat discharge portion, wherein the first cooling component and a second cooling component both are arranged at least partially on the outside of the frame element.
Embodiment 2: The battery cell frame according to any one of the preceding embodiments, wherein one or more of the cooling components comprise at least one material selected from the group consisting of: copper, gold, aluminum, one or more of their alloys and graphite.
Embodiment 3: The battery cell frame according to any one of the preceding embodiments, wherein the at least one heat discharge portion comprises at least one bend, wherein a first portion of the heat discharge portion adjacent to the collecting portion is arranged in parallel to the collecting portion and wherein a second portion of the heat discharge portion is arranged essentially perpendicular to the collecting portion, with a deviation from a perpendicular orientation by no more than 20°.
Embodiment 4: The battery cell frame according to the preceding embodiment, wherein the at least one heat discharge portion comprises at least one further bend in an opposite direction than the at least one first bend, specifically two opposing bends, wherein a third portion of the heat discharge portion arranged between the first portion and the second portion of the heat discharge portion is arranged at an angle from the collecting portion in the range of from 5° to 85°, specifically from 20° to 70°, more specifically from 40° to 50°.
Embodiment 5: The battery cell frame according to the preceding embodiment, wherein the at least one heat discharge portion comprises two bends in opposing directions, wherein the first bend is a 45°±5°-bend in a direction towards a bottom of the frame element and wherein the second bend is a 135°±5°-bend in a direction away from the bottom of the frame element.
Embodiment 6: The battery cell frame according to any one of the preceding embodiments, wherein the heat discharge portion of the first cooling component penetrates a wall of the frame element, the wall separating the inside of the frame element from the outside of the frame element.
Embodiment 7: The battery cell frame according to any one of the preceding embodiments, wherein the at least one collecting portion of the first cooling component is arranged within the inside of the frame element in planar fashion.
Embodiment 8: The battery cell frame according to any one of the preceding embodiments, wherein the first cooling component comprises two heat discharge portions arranged on opposing sides of the collecting portion.
Embodiment 9: The battery cell frame according to the preceding embodiment, wherein the two discharge portions have different shapes, specifically one of the discharge portions comprises two bends according to any one of embodiments 4 and 5 and another of the discharge portions comprises a single bend according to embodiment 3.
Embodiment 10: The battery cell frame according to any one of the preceding embodiments, wherein the second cooling component has at least two portions arranged at an angle, specifically the two portions are arranged at an essentially perpendicular angle with a deviation from a perpendicular orientation of no more than 20°, more specifically the second cooling component is L-shaped.
Embodiment 11: The battery cell frame according to any one of the preceding embodiments, wherein the battery cell frame comprises at least one third cooling component, wherein the third cooling component is identical to the second cooling component or is formed mirror-inversely to the second cooling component.
Embodiment 12: The battery cell frame according to the preceding embodiment, wherein the second and third cooling components are arranged on opposite sides of the frame element.
Embodiment 13: The battery cell frame according to any one of the preceding embodiments, wherein the plastic frame element has a bottom portion and at least one sidewall portion, specifically at least three sidewall portions, more specifically four sidewall portions, adjacent to the bottom portion, e.g. the plastic frame element has a cuboid shape.
Embodiment 14: The battery cell frame according to the preceding embodiment, wherein the bottom portion of the plastic frame element comprises at least one ribbed structure on its surface facing outside of the frame element.
Embodiment 15: The battery cell frame according to any one of the preceding embodiments, wherein the plastic frame element is or comprises at least one polymeric material.
Embodiment 16: The battery cell frame according to the preceding embodiment, wherein the polymeric material is one or more of a thermoplastic material and a thermosetting material.
Embodiment 17: The battery cell frame according to any one of the preceding embodiments, further comprising at least one connecting element, wherein the battery cell frame is connectable to one or more of a further battery cell frame and an end plate via the connecting element.
Embodiment 18: The battery cell frame according to the preceding embodiment, wherein the connecting element is formed integrally with the plastic frame element.
Embodiment 19: The battery cell frame according to any one of the two preceding embodiments, wherein the connecting element is one or more of an eyelet and a hook.
Embodiment 20: A method for manufacturing a battery cell frame according to any one of the preceding embodiments, comprising
   a) providing the at least two cooling components;
   b) generating the at least one frame element by at least partially overmolding at least one of the at least two cooling components in at least one overmolding process.
Embodiment 21: A battery module comprising a plurality of battery cells, specifically a plurality of battery pouches, and a plurality of battery cell frames according to any one of the preceding embodiments referring to a battery cell frame, wherein the battery cell frames are arranged in a stack, wherein at least one of the battery cells is arranged inside of each of the battery cell frames, wherein the battery module further comprises at least one end plate forming a lid on the stack of battery cell frames.
Embodiment 22: The battery module according to the preceding embodiment, further comprising a plurality of thermal compensation pads, wherein at least one of the thermal compensation pads is arranged inside of each of the battery cell frames on a side of the battery cell opposing a collecting portion of the first cooling component of the battery cell frame.
Embodiment 23: The battery module according to any one of the preceding embodiments referring to a battery module, wherein each of the thermal compensation pads is compressible and/or comprises at least one porous sheet impregnated with at least one solvent.
Embodiment 24: The battery module according to the preceding embodiment, wherein the porous sheet and the solvent are enclosed in a laminating sheet comprising aluminum.
Embodiment 25: The battery module according to any one of the two preceding embodiments, wherein each of the thermal compensation pads is configured for compensating a potential mechanical swelling of the battery cell, wherein at least one of the thermal compensation pads, preferably all of the thermal compensation pads, is thermally isolating.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a battery module in a perspective view;
- Figure 2: shows a part of an embodiment of a battery module in a perspective view;
- Figure 3: shows an embodiment of a battery cell frame in a perspective view;
- Figures 4 to 7: show different embodiments of cooling components of a battery cell frame in perspective views (Figures 4, 5 and 7) and in a partial side view (Figure 6); and
- Figure 8: shows a flow chart of a method for manufacturing a battery cell frame.

### Detailed description of the embodiments

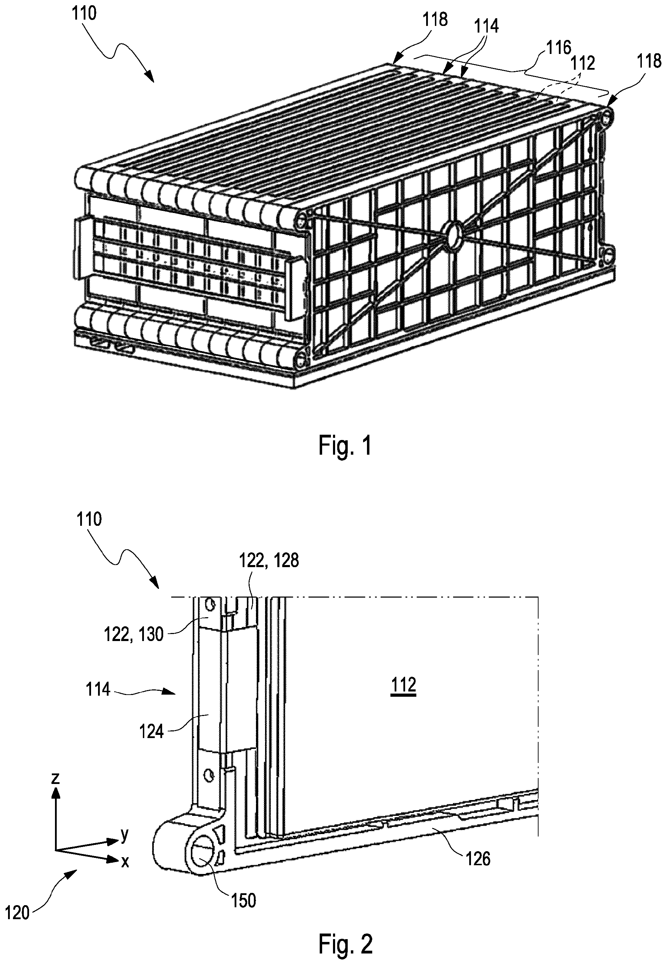

In Figure 1, an embodiment of a battery module 110 is illustrated in a perspective view. The battery module comprises a plurality of battery cells 112 and a plurality of battery cell frames 114. The battery cell frames 114 are arranged in a stack 116, wherein at least one of the battery cells 112 is arranged inside of each of the battery cell frames 114. Further, the battery module comprises at least one end plat 118 forming a lid on the stack 116 of battery cell frames 114.

Figure 2 shows a part of an embodiment of a battery module 110 in a perspective view. Specifically, the battery cell frame 114 is illustrated having the battery cell 112, specifically a battery pouch, arranged inside. The battery cell 112 is supportable by the battery cell frame 114 in at least three directions of a Cartesian coordinate system. In particular, and referring to the illustrated reference coordinate system 120, the battery cell 112 may be supported by the battery cell frame 114 at least in a negative direction of an x-axis, in a positive and negative direction of a z-axis and in a positive and negative direction of a y-axis of the reference coordinate system 120.

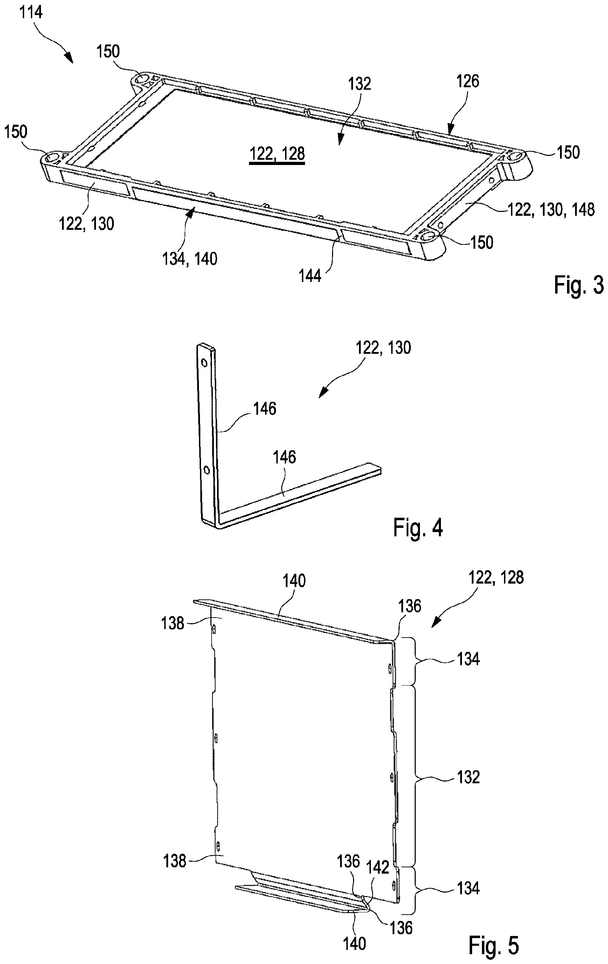

Figure 3 shows an embodiment of a battery cell frame 114 in a perspective view. The battery cell frame 114 comprises at least two cooling components 122 configured for compensating a temperature of the at least one battery cell 112, specifically of at least one of the battery cell's electrodes 124. The battery cell frame 11 further comprises at least one plastic frame element 126 generated by at least partially overmolding at least one of the cooling components 122. A first cooling component 128 and a second cooling component 130 are both arranged at least partially on the outside of the frame element 126.

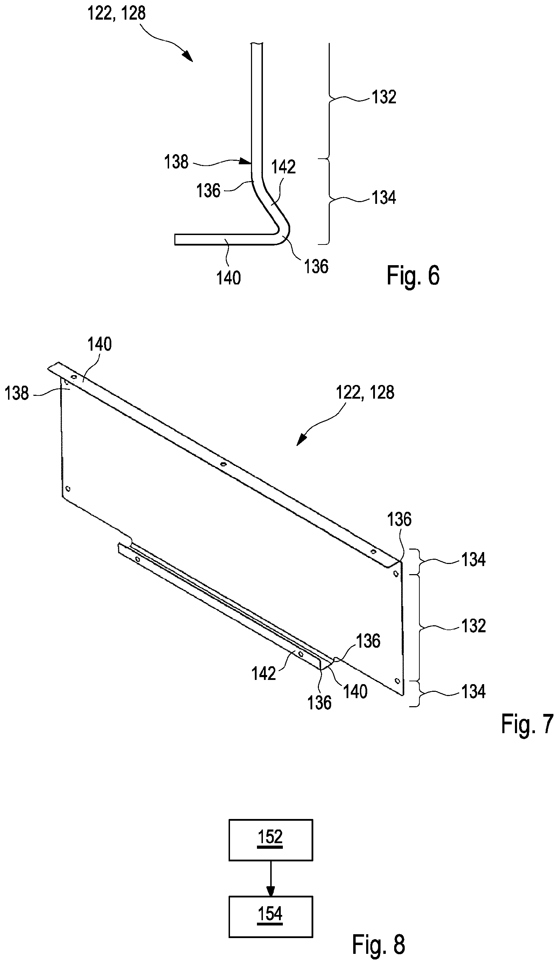

In Figures 4 to 7 different embodiments of cooling components 122 are illustrated. In particular, Figure 4 shows an embodiment of the second cooling component 130, whereas Figures 5 and 7 show different embodiments of the first cooling component 128 in a perspective view and Figure 6 illustrates part of the first cooling component 128 in a side view.

The first cooling component 128 comprises at least one planar collecting portion 132 and at least one heat discharge portion 134. As an example, the heat discharge portion 134 may comprise at least one bend 136. Specifically, a first portion 138 of the heat discharge portion 134 adjacent to the collecting portion 132 may be arranged in parallel to the collecting portion 132, wherein a second portion 140 of the heat discharge portion 134 may be arranged essentially perpendicular to the collecting portion 132. Thus, in a single bend configuration, the bend 136 may for example separate a first portion 138 of the heat discharge portion 134 from a second portion 140 of the heat discharge portion 134.

Additionally or alternatively, the at least one heat discharge portion 134 may comprise at least one further bend 136. As an example, the further bend 136 may be bent in an opposite direction than the at least one first bend 136, i.e. the heat discharge portion 134 may comprise two opposing bends 136, as exemplarily illustrated in Figures 5 and 6. Specifically in this opposing bend configuration, a third portion 142 of the heat discharge portion 134 may be arranged between the first portion 138 and the second portion 140 of the heat discharge portion 134. The third portion 142 may be arranged at an angle from the collecting portion in the range of from 5° to 85°.

Alternatively however, the further bend 136 may be bent in the same direction as the first bend 136, as exemplarily illustrated in Figure 7. Specifically, in this configuration, the third portion 142 of the heat discharge portion 134 may be arranged adjacent to the second portion 140 and may be arranged essentially parallel to one or more of the first portion 138 and the collecting portion 132.

In particular, and as exemplarily illustrated in Figures 5, 6 and 7, the first cooling component 128 may comprise two heat discharge portions 134 arranged on opposing sides of the collecting portion 132. In particular, the two discharge portions 134 may have different shapes. Specifically, one of the discharge portions 134 may comprise two bends 136 and another of the discharge portions 134 may comprise a single bend 136.

As an example, the heat discharge portion (134) of the first cooling component (128) may penetrate a wall 144 of the frame element, as exemplarily illustrated in Figure 3. In particular, the wall 144 may separate the inside of the frame element 126 from the outside of the frame element 126. In particular, the at least one collecting portion 132 of the first cooling component 128 may be arranged within the inside of the frame element 126 in planar fashion, whereas third portion 142 of the heat discharge portion 134 may be arranged such that an underside of the third portion 142 may face towards the outside of the frame element 126. As an example, the second portion 140 of the heat discharge portion 134 may, specifically in this configuration, be arranged within the wall 144 of the frame element 136.

The second cooling component 130 may have at least two portions 146 arranged at an essentially perpendicular angle with a deviation from a perpendicular orientation of no more than 20°. Specifically, and as exemplarily illustrated in Figure 4, the second cooling component 130 may be L-shaped.

Further, the battery cell frame 114 may comprise at least one third cooling component 148 identical to the second cooling component 130, as exemplarily illustrated in Figure 3. Alternatively, the third cooling component 148 may be formed mirror-inversely to the second cooling component 130. As an example, the second 130 and third 148 cooling components may be arranged on opposite sides of the frame element 126.

The battery cell frame 114 may further comprise at least one connecting element, preferably four connecting elements, via which the battery cell frame 114 may be connectable to one or more of a further battery cell frame 114 and the end plate 118. The connecting element may specifically be formed integrally with the plastic frame element 126 and may for example be one or more of an eyelet 150 and a hook.

Figure 8 illustrates a flow chart of a method for manufacturing a battery cell frame 114. The method comprises the following steps:
a) providing the at least two cooling components 122;
b) generating the at least one frame element 126 by at least partially overmolding at least one of the at least two cooling components 122 in at least one overmolding process.

### List of reference numbers

- 110: battery module
- 112: battery cell
- 114: battery cell frame
- 116: stack of battery cell frames
- 118: end plate
- 120: reference coordinate system
- 122: cooling components
- 124: electrode
- 126: plastic frame element
- 128: first cooling component
- 130: second cooling component
- 132: collecting portion
- 134: heat discharge portion
- 136: bend
- 138: first portion of the heat discharge portion
- 140: second portion of the heat discharge portion
- 142: third portion of the heat discharge portion
- 144: wall of the frame element
- 146: portion of the second cooling component
- 148: third cooling component
- 150: eyelet
- 152: step a)
- 154: step b)

## Claims

1. A battery cell frame (114), wherein at least one battery cell (112) is supportable by the battery cell frame (114) in at least three directions of a Cartesian coordinate system, the battery cell frame (114) comprising at least two cooling components (122) configured for compensating a temperature of the at least one battery cell (112) and at least one plastic frame element (126) generated by at least partially overmolding at least one of the cooling components (122), wherein a first cooling component (128) comprises at least one planar collecting portion (132) and at least one heat discharge portion (134), wherein the first cooling component (128) and a second cooling component (130) both are arranged at least partially on the outside of the frame element (126).

2. The battery cell frame (114) according to any one of the preceding claims, wherein one or more of the cooling components (122) comprise at least one material selected from the group consisting of: copper, gold, aluminum, one or more of their alloys and graphite.

3. The battery cell frame (114) according to any one of the preceding claims, wherein the at least one heat discharge portion (134) comprises at least one bend (136), wherein a first portion (138) of the heat discharge portion (134) adjacent to the collecting portion (132) is arranged in parallel to the collecting portion (132) and wherein a second portion (140) of the heat discharge portion (134) is arranged essentially perpendicular to the collecting portion (132), with a deviation from a perpendicular orientation by no more than 20°.

4. The battery cell frame (114) according to the preceding claim, wherein the at least one heat discharge portion (134) comprises at least one further bend (136) in an opposite direction than the at least one first bend (136), wherein a third portion (142) of the heat discharge portion (134) arranged between the first portion (138) and the second portion (140) of the heat discharge portion (134) is arranged at an angle from the collecting portion (132) in the range of from 5° to 85°.

5. The battery cell frame (114) according to any one of the preceding claims, wherein the heat discharge portion (134) of the first cooling component (128) penetrates a wall of the frame element, the wall separating the inside of the frame element from the outside of the frame element.

6. The battery cell frame (114) according to any one of the preceding claims, wherein the at least one collecting portion (132) of the first cooling component (128) is arranged within the inside of the frame element (126) in planar fashion.

7. The battery cell frame (114) according to any one of the preceding claims, wherein the first cooling component (128) comprises two heat discharge portions (134) arranged on opposing sides of the collecting portion (132).

8. The battery cell frame (114) according to any one of the preceding claims, wherein the second cooling component (130) has at least two portions (146) arranged at an angle.

9. The battery cell frame (114) according to any one of the preceding claims, wherein the battery cell frame (114) comprises at least one third cooling component (148), wherein the third cooling component (148) is identical to the second cooling component (130) or is formed mirror-inversely to the second cooling component (130).

10. The battery cell frame (114) according to any one of the preceding claims, wherein the plastic frame element (126) has a bottom portion and at least one sidewall portion (144).

11. The battery cell frame (114) according to any one of the preceding claims, wherein the plastic frame element (126) is or comprises at least one polymeric material.

12. The battery cell frame (114) according to any one of the preceding claims, further comprising at least one connecting element, wherein the battery cell frame (114) is connectable to one or more of a further battery cell frame (114) and an end plate (118) via the connecting element, wherein the connecting element is formed integrally with the plastic frame element (126), wherein the connecting element is one or more of an eyelet (150) and a hook.

13. A method for manufacturing a battery cell frame (114) according to any one of the preceding claims, comprising
a) providing the at least two cooling components (122);
b) generating the at least one frame element (126) by at least partially overmolding at least one of the at least two cooling components (122) in at least one overmolding process.

14. A battery module (110) comprising a plurality of battery cells (112) and a plurality of battery cell frames (114) according to any one of the preceding claims referring to a battery cell frame (114), wherein the battery cell frames (114) are arranged in a stack (116), wherein at least one of the battery cells (112) is arranged inside of each of the battery cell frames (114), wherein the battery module (110) further comprises at least one end plate (118) forming a lid on the stack (116) of battery cell frames (114).

15. The battery module (110) according to the preceding claim, further comprising a plurality of thermal compensation pads, wherein at least one of the thermal compensation pads is arranged inside of each of the battery cell frames (114) on a side of the battery cell (112) opposing a collecting portion (132) of the first cooling component (128) of the battery cell frame (114).
